# EUROPEAN PATENT APPLICATION

(11) **EP 0 604 326 A2**
(43) Date of publication of application: **29.06.1994**
(21) Application number: 93420487.6
(22) Date of filing: 10.12.1993
(51) Int. Cl.: H04N 1/46

(54) **Banding reduction via color channel interlacing**

(30) Priority: 23.12.1992 US 996242
(71) Applicant: EASTMAN KODAK COMPANY, Rochester, New York 14650-2201 (US)
(72) Inventor: Couwenhoven, Douglas W., Rochester, New York 14650-2201 (US)
(74) Representative: Buff, Michel

(57) **Abstract**

A process for altering the phase of banding artifacts of a printing device deals with the separation of low frequency luminance modulation into higher frequency colored modulation. The individual writing element that is used to print each line of an image is changed between the color channels. In the process, each channel is printed so that original image data are registered. Lower frequency neutral bands are then converted to higher frequency colored bands to reduce visibility of the artifacts.

## Description

### Technical Field

The present invention is directed to the reducing banding in images via color channel interlacing and, more particularly, to a method to reduce banding in images by adding a number of blank lines to the beginning of each color channel.

### Background Art

Digital printing devices designed for the hardcopy of color images often use several different color channels, normally three or four, to compose the image. These color channels are often printed individually in registration to reproduce the colors in the original image. During the printing process, most digital printing devices will add image structure artifacts to the image, which produce undesirable scene content, and degrade the quality of the image. Among the various artifacts introduced by digital printing devices, one of the more objectionable is banding.

In the prior art, it is known to reduce banding in a single channel of a printing device. Much of the prior art deals with methods to reduce the visibility of errors caused by misplacement of the scanned lines of data. U.S. Patent No. 5,079,563 describes a method for reducing the error in placement of printed lines of data on the page. Unfortunately, the prior art does not address the problem of spatially decorrelating the banding between the separate color channels of a printed image.

It is seen then that it would be desirable to have a method for reducing the visibility of the banding artifacts, particularly focusing on the placement of the color channels with respect to each other to produce a perceptually lower degree of banding artifacts.

### Summary of the Invention

The present invention reduces the visibility of the banding artifacts by utilizing the fact that the color channels comprising an image can be individually manipulated before or during the printing process. Rather than focus on the banding caused by faulty placement of lines, the present invention addresses the banding caused by unwanted modulation of the data in each line by the particular writing element that produced it.

In accordance with one aspect of the present invention, a method of altering the phase of a banding artifact comprises the steps of: printing each channel so that original image data are registered; and converting lower frequency neutral bands to higher frequency colored bands to reduce visibility of the artifacts.

Accordingly, it is an object of the present invention to dissolve the low frequency neutral bands into higher frequency colored bands. These higher frequency colored bands will produce less objectional image structure artifacts, and thereby produce higher quality images. It is a further object of the present invention to disguise the unwanted variation in the amplitude of the scanned lines produced by a device. Other objects and advantages of the invention will be apparent from the following description, the accompanying drawings and the appended claims.

### Brief Description of the Drawings

Fig. 1 is a block diagram illustrating color channels printed at different offset locations; and
Fig. 2 is a graphical representation of the effect of the banding reduction process of the present invention on an image, wherein low frequency neutral bands become high frequency colored bands.

### Detailed Description of the Preferred Embodiments

The present invention provides for the separation of low frequency luminance modulation, which is black and white, into higher frequency colored modulation, which the eye will be less sensitive to, in general. To alter the phase of banding artifacts, the individual writing element that is used to print each line of the image must change between the color channels. As will be obvious to those skilled in the art, this can be accomplished in a variety of suitable ways, to accomplish the goal of disguising unwanted variation in the amplitude of the scanned lines produced by a device.

For example, one method for altering the phase of the banding artifacts provides for adding a number of blank lines, Cᵢ, to the beginning of each color channel, where the "i" denotes the channel number. The number of lines added to a given channel should preferably be less than N, where N is the number of writing elements in the printing device, and no two channels should have the same number of blank lines added to them. In an alternative embodiment, some of the color channels may have the same phase shift. For example, a device may have three writing elements that prints an image using four different color channels. In this case, at least two of the color channels must have the same phase shift.

Each channel should be printed so that the original image data are registered. Regardless of the number of blank lines added to the beginning of each color channel, they must be printed so that the original data overlaps correctly. This means that if two color channels happen to have the same number of blank lines added to them, i.e., the same phase shift, then those two color channels would be printed at the same starting location, to ensure that the original data contained in those two channels properly overlaps. This can be done by printing each channel at a location corresponding to Cᵢ line-widths prior to the normal starting location. The normal starting position is simply used to refer to a certain location on the output device where the image is normally printed. When it is stated that each of the color channels must be printed a certain distance relative to a normal starting position, that simply means that the color channels must be printed with the proper relative positioning so that the original image data contained in them comes out registered. This will result in printing of the image information in registration, while varying the phase of the banding between the color channels. This effectively converts lower frequency neutral bands to higher frequency colored bands, reducing the visibility of the artifact.

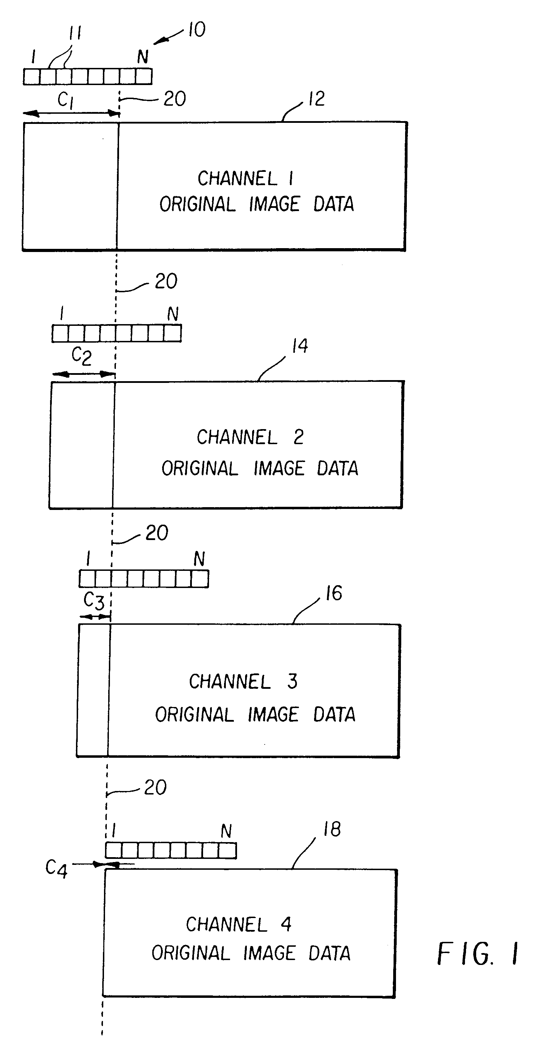

Referring now to the drawings, Fig. 1 is a block diagram illustrating color channels printed at different offset locations. For purposes of description only, an image is assumed to be composed of four color channels, and is printed with a digital printer that has N individual writing elements. A printhead 10 is positioned at the start of print, as shown. The printing device or printhead 10 contains N writing elements 11, where N is shown as eight in this particular example. Groups of blank lines C₁, C₂, C₃, and C₄ are added to the beginning of first, second, third, and fourth channels 12, 14, 16, and 18, respectively. In general, C₁, C₂, C₃, and C₄ are less than N, although this is not a necessary constraint. Consequently, C₄, in this particular example, is shown as being equal to zero.

Continuing with Fig. 1, the present invention provides for beginning printing of first channel 12 C₁ lines before the normal starting location, indicated by line 20. This will cause line one of the original image data to be printed in the normal starting location with a writing element number C₁ + 1, relative to the N number of writing elements 11 in the printhead 10. In this example, C₁ corresponds to six writing elements 11 in the printhead 10, so writing element number C₁ + 1 is writing element number seven, the first writing element to the right side of the normal starting location indicated by line 20.

Similarly, the present invention also provides for beginning printing of second channel 14 C₂ lines before the normal starting location, causing line one of the original image data to be printed in the normal starting location with writing element number C₂ + 1, or five. At third channel 16, original image data is printed in the normal starting location with writing element number C₃ + 1, or three. Since C₄ is equal to zero in this example, fourth channel 18 is simply printed at the normal starting location with the image line one printed by the first writing element 11.

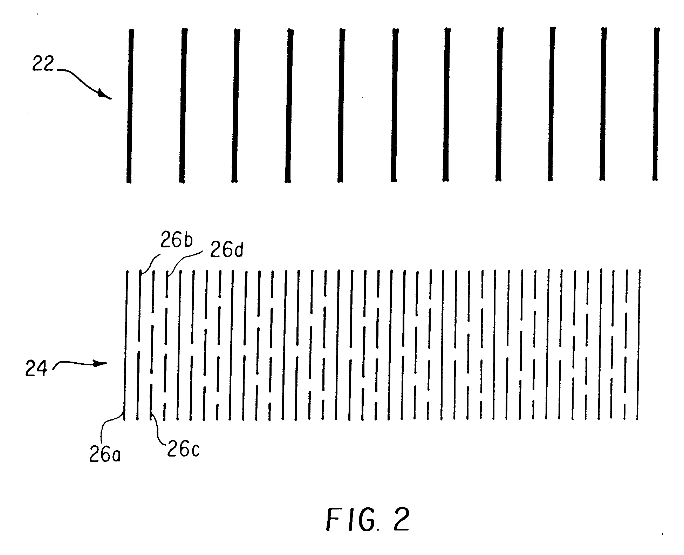

Referring now to Fig. 2, a graphical representation of the effect of the banding reduction process of the present invention on the image is illustrated. In Fig. 2, low frequency neutral bands are dissolved into higher frequency colored bands. These higher frequency colored bands will produce less objectional image structure artifacts, thereby producing a higher quality image.

In Fig. 2, row 22 is a graphical representation of the banding that would be produced in an image by a device with a multiplicity of writing elements in which the color channels that compose the image are printed in phase. A given printed scan line is produced in each color channel by the same writing element of the printing device. Any non-uniformities in the response of the writing elements will cause banding artifacts at the frequency of the number of writing elements in the printing device.

Row 24 in Fig. 2 is a graphical representation of the banding that would be produced in an image printed with the same device that was used to print row 22, but now the phase between the writing element number and the scan line number has been changed individually for each color channel, as described in reference to Fig. 1. Thus, any non-uniformities in the writing elements, which produce banding, will not overlap between the color channels, and a higher frequency banding pattern will result.

Since there are four color channels in Fig. 1, the print row 24 repeats with every fourth image line 26. For purposes of illustration only, image line 26a is a solid line originating from first channel 12; image line 26b is comprised of two dashed lines originating from second channel 14; image line 26c is comprised of three dashed lines originating from third channel 16; and image line 26d is comprised of four dashed lines originating from fourth channel 18.

The present invention provides for the placement of the color channels with respect to each other to produce a perceptually lower degree of banding artifacts. This spatial shifting of the separate color channels alters the phase of the banding artifacts between the color channels, and produces a visually less offensive artifact. Consequently, the present invention does not deal with the banding caused by faulty placement of lines, but rather the banding caused by unwanted modulation of the data in each line by the particular writing element that produced it.

### Industrial Applicability and Advantages

The present invention is useful in the field of banding reduction in that it alters the phase of banding artifacts of a printing device. The present invention has the advantage of dissolving the low frequency neutral bands into higher frequency colored bands, which are visually preferable. These higher frequency colored bands produce less objectional image structure artifacts, and thereby have the further advantage of producing higher quality images.

Having described the invention in detail and by reference to the preferred embodiment thereof, it will be apparent that other modifications and variations are possible without departing from the scope of the invention defined in the appended claims.

## Claims

1. A method of altering the phase of banding artifacts of a printing device such that the individual writing element that is used to print each line of an image is changed between the color channels, the method comprising the steps of:
printing each channel so that original image data are registered; and
converting lower frequency neutral bands to higher frequency colored bands to reduce visibility of the artifacts.

2. A method of altering the phase of banding artifacts as claimed in claim 1 further comprising the step of adding a number of blank lines to the beginning of each color channel.

3. A method of altering the phase of banding artifacts as claimed in claim 1 wherein the number of blank lines is directly related to the channel number.

4. A method of altering the phase of banding artifacts as claimed in claim 1 wherein the number of lines added to a given channel is less than the number of writing elements in the printing device.

5. A method of altering the phase of banding artifacts as claimed in claim 1 wherein the number of blank lines added to one channel is never equal to the number of blank lines added to any other channel.

6. A method of altering the phase of banding artifacts as claimed in claim 1 wherein the number of blank lines added to one channel is equal to the number of blank lines added to at least one other channel.

7. A method of altering the phase of banding artifacts as claimed in claim 1 wherein the step of printing each channel further comprises the step of printing each channel at a location corresponding to the number of blank line line widths prior to a normal starting location.

8. A method of altering the phase of banding artifacts as claimed in claim 1 wherein the step of printing each channel further comprises the steps of:
printing image information in registration; and
varying the phase of banding between the color channels.
